# EUROPEAN PATENT SPECIFICATION

(11) **EP 2 829 092 B1**
(45) Date of publication and mention of the grant of the patent: **16.03.2016**
(21) Application number: 13714159.4
(22) Date of filing: 19.03.2013
(51) Int. Cl.: H04W 8/08, H04W 8/24, H04W 52/02

(54) **DEVICES AND METHODS FOR MODIFYING PERFORMANCE ATTRIBUTES BASED ON DEVICE CAPABILITIES**
VORRICHTUNGEN UND VERFAHREN ZUM ÄNDERN DER LEISTUNGSEINSTELLUNGEN ATTRIBUTE GERÄTEKONFIGURATION UNTERSCHIEDLICHE
DISPOSITIFS ET METHODES DE MODIFICATION DES ATTRIBUTS DE PERFORMANCE BASÉS SUR LES CAPACITÉS DU PÉRIPHÉRIQUE

(30) Priority: 20.03.2012 US 201261613452 P; 20.03.2012 US 201261613454 P; 17.01.2013 US 201313744221
(43) Date of publication of application: 28.01.2015
(73) Proprietor: Qualcomm Incorporated, San Diego, CA 92121-1714 (US)
(72) Inventor: PATWARDHAN, Ravindra Manohar, San Diego, California 92121-1714 (US); ATTAR, Rashid Ahmed Akbar, San Diego, California 92121-1714 (US)
(74) Representative: Catesby, Olivia Joanne
(86) International application number: PCT/US2013/032975
(87) International publication number: WO 2013/142501

(56) References cited:
- WO-A1-2009/141001
- WO-A1-2011/150191
- WO-A2-03/092308

## Description

### TECHNICAL FIELD

The technology discussed in this patent application relates generally to wireless communications, and more specifically, to methods and devices for modified network performance attributes in response to identifying access terminal capabilities. Some embodiments can enable a network controller to detect terminal types in a network and based on detected types, altering existing communication arrangements to improve communications and/or efficiently utilize power resources.

### BACKGROUND

Wireless communications systems are widely deployed to provide various types of communication content such as voice, video, packet data, messaging, broadcast, and so on. These systems may be accessed by various types of devices adapted to facilitate wireless communications, where multiple devices share the available system resources (e.g., time, frequency, and power). Examples of such wireless communications systems include code-division multiple access (CDMA) systems, time-division multiple access (TDMA) systems, frequency-division multiple access (FDMA) systems and orthogonal frequency-division multiple access (OFDMA) systems.

Multiple types of devices are adapted to utilize such wireless communications systems. Such devices may be generally referred to as access terminals. In many wireless communications systems, various access terminals may exhibit one or more unique features. For instance, although many access terminals are adapted for mobility, some access terminals may experience little to no change in location. WO2009141001 A1 discloses a method of controlling user equipment in a wireless telecommunications network in which a mobility characteristics of said user equipment is determined and then recorded in an assigned information element. Similarly, many access terminals operate on a limited power source, such as a battery, while other access terminals are coupled to a much more consistent power source, such as being plugged into a power grid. For terminals with limited power resources, enabling efficient power usage is generally desired.

### BRIEF SUMMARY OF SOME EXAMPLES

The following summarizes some aspects of the present disclosure to provide a basic understanding of the discussed technology. This summary is not an extensive overview of all contemplated features of the disclosure, and is intended neither to identify key or critical elements of all aspects of the disclosure nor to delineate the scope of any or all aspects of the disclosure. Its sole purpose is to present some concepts of one or more aspects of the disclosure in summary form as a prelude to the more detailed description that is presented later.

Since various types of access terminals can employ different characteristics and features, it may be desirable to facilitate disclosure of such features so network entities can employ different performance attributes for access terminals with different capabilities. Various examples and implementations of the present disclosure facilitate identification of access terminal capabilities and adaptation of one or more network performance attributes to such capabilities.

According to at least one aspect of the present disclosure, access terminals may include a communications interface and a storage medium each coupled with a processing circuit. The processing circuit may be adapted to send a capability indication message adapted to identify at least one capability associated with the access terminal. The processing circuit may further employ one or more altered performance attributes associated with the at least one capability identified in the capability indication message.

Further aspects of the present disclosure provide methods operational on an access terminal and/or access terminals including means to perform such methods. One or more examples of such methods may include identifying at least one capability associated with the access terminal, and transmitting a capability indication message adapted to identify the at least one identified capability associated with the access terminal. At least one adjusted performance attribute associated with the at least one capability identified in the capability indication message may be employed by the access terminal.

Still further aspects include computer-readable storage mediums comprising programming operational on a computer, such as an access terminal. According to one or more examples, such programming may be adapted for causing a computer to transmit a capability indication message adapted to identify at least one capability associated with an access terminal, and to employ at least one altered performance attribute associated with the at least one capability identified in the capability indication message.

According to at least one additional aspect of the present disclosure, network nodes may include a communications interface and a storage medium each coupled with a processing circuit. The processing circuit may be adapted to receive a capability indication message via the communications interface. The capability indication message can identify at least one capability associated with an access terminal. The processing circuit may further be adapted to employ at least one adjusted performance attribute for the access terminal, where the at least one adjusted performance attribute is associated with the at least one capability identified in the received capability indication message.

Yet further aspects of the present disclosure provide methods operational on a network node and/or network nodes including means to perform such methods. One or more examples of such methods may include receiving a capability indication message identifying at least one capability associated with an access terminal. In response to the received capability indication message, at least one adjusted performance attribute may be employed for the access terminal. The at least one adjusted performance attribute may be selected based on the at least one capability identified in the received capability indication message.

Still further aspects include computer-readable storage mediums comprising programming operational on a computer, such as a network node. According to one or more examples, such programming may be adapted for causing a computer to receive a capability indication message identifying at least one capability associated with an access terminal. The programming may further be adapted for causing a computer to employ at least one adjusted performance attribute for the access terminal, where the at least one adjusted performance attribute is selected based on the at least one capability identified in the received capability indication message.

Other aspects, features, and embodiments of the present invention will become apparent to those of ordinary skill in the art, upon reviewing the following description of specific, exemplary embodiments of the present invention in conjunction with the accompanying figures. While features of the present invention may be discussed relative to certain embodiments and figures below, all embodiments of the present invention can include one or more of the advantageous features discussed herein. In other words, while one or more embodiments may be discussed as having certain advantageous features, one or more of such features may also be used in accordance with the various embodiments of the invention discussed herein. In similar fashion, while exemplary embodiments may be discussed below as device, system, or method embodiments it should be understood that such exemplary embodiments can be implemented in various devices, systems, and methods.

### BRIEF DESCRIPTION OF THE DRAWINGS

FIG. 1 is a block diagram of a network environment in which one or more aspects of the present disclosure may find application.
FIG. 2 is a block diagram illustrating select components of the wireless communication system of FIG. 1 according to some embodiments.
FIG. 3 is a flow diagram illustrating an example for adapting one or more network features for a particular access terminal according to some embodiments.
FIG. 4 is a block diagram illustrating select components of an access terminal according to some embodiments.
FIG. 5 is a flow diagram illustrating a method operational on an access terminal according to some embodiments.
FIG. 6 is a block diagram illustrating select components of a network node according to some embodiments.
FIG. 7 is a flow diagram illustrating a method operational on a network node according to some embodiments.

### DETAILED DESCRIPTION

The description set forth below in connection with the appended drawings is intended as a description of various configurations and is not intended to represent the only configurations in which the concepts and features described herein may be practiced. The following description includes specific details for the purpose of providing a thorough understanding of various concepts. However, it will be apparent to those skilled in the art that these concepts may be practiced without these specific details. In some instances, well known circuits, structures, techniques and components are shown in block diagram form to avoid obscuring the described concepts and features.

The various concepts presented throughout this disclosure may be implemented across a broad variety of telecommunication systems, network architectures, and communication standards. Certain aspects of the disclosure are described below for CDMA and 3rd Generation Partnership Project 2 (3GPP2) 1x protocols and systems, and related terminology may be found in much of the following description. However, those of ordinary skill in the art will recognize that one or more aspects of the present disclosure may be employed and included in one or more other wireless communication protocols and systems.

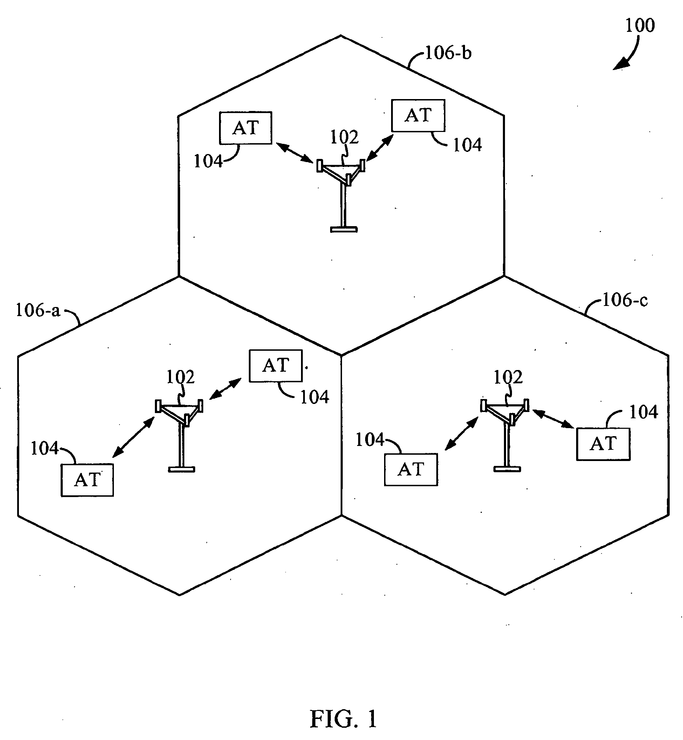

Referring now to FIG. 1, a block diagram of a network environment in which one or more aspects of the present disclosure may find application is illustrated. The wireless communications system 100 is adapted to facilitate wireless communication between one or more base stations 102 and access terminals 104. The base stations 102 and access terminals 104 may be adapted to interact with one another through wireless signals. In some instances, such wireless interaction may occur on multiple carriers (waveform signals of different frequencies). Each modulated signal may carry control information (e.g., pilot signals), overhead information, data, etc.

The base stations 102 can wirelessly communicate with the access terminals 104 via a base station antenna. The base stations 102 may each be implemented generally as a device adapted to facilitate wireless connectivity (for one or more access terminals 104) to the wireless communications system 100. Such a base station 102 may also be referred to by those skilled in the art as a base transceiver station (BTS), a radio base station, a radio transceiver, a transceiver function, a basic service set (BSS), and extended service set (ESS), a node B, a femto cell, a pico cell, or some other suitable terminology.

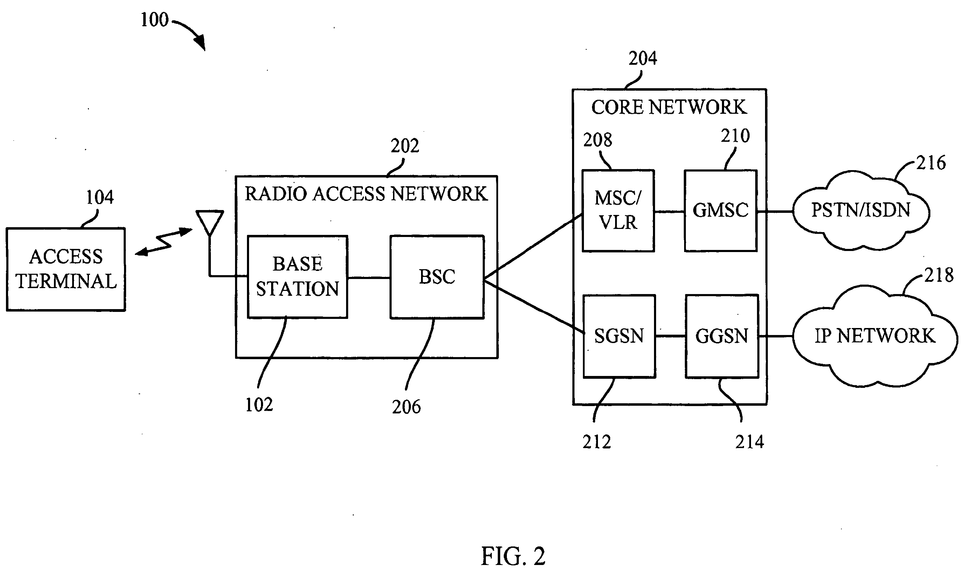

The base stations 102 are configured to communicate with the access terminals 104 under the control of a base station controller (see FIG. 2). Each of the base station 102 sites can provide communication coverage for a respective geographic area. The coverage area 106 for each base station 102 here is identified as cells 106-a, 106-b, or 106-c. The coverage area 106 for a base station 102 may be divided into sectors (not shown, but making up only a portion of the coverage area). The system 100 may include base stations 102 of different types.

One or more access terminals 104 may be dispersed throughout the coverage areas 106. Each access terminal 104 may communicate with one or more base stations 102. An access terminal 104 may generally include one or more devices that communicate with one or more other devices through wireless signals. Such an access terminal 104 may also be referred to by those skilled in the art as a user equipment (UE), a mobile station (MS), a subscriber station, a mobile unit, a subscriber unit, a wireless unit, a remote unit, a mobile device, a wireless device, a wireless communications device, a remote device, a mobile subscriber station, a mobile terminal, a wireless terminal, a remote terminal, a handset, a terminal, a user agent, a mobile client, a client, or some other suitable terminology. An access terminal 104 may include a mobile terminal and/or an at least substantially fixed terminal. Examples of an access terminal 104 include a mobile phone, a pager, a wireless modem, a personal digital assistant, a personal information manager (PIM), a personal media player, a palmtop computer, a laptop computer, a tablet computer, a television, an appliance, an e-reader, a digital video recorder (DVR), a machine-to-machine (M2M) device, and/or other communication/computing device which communicates, at least partially, through a wireless or cellular network.

Turning to FIG. 2, a block diagram illustrating select components of the wireless communication system 100 is depicted according to at least one example. As illustrated, the base stations 102 are included as at least a part of a radio access network (RAN) 202. The radio access network (RAN) 202 is generally adapted to manage traffic and signaling between one or more access terminals 104 and one or more other network entities, such as network entities included in a core network 204. The radio access network 202 may, according to various implementations, be referred to by those skill in the art as a base station subsystem (BSS), an access network, a GSM Edge Radio Access Network (GERAN), a UMTS Terrestrial Radio Access Network (UTRAN), etc.

In addition to one or more base stations 102, the radio access network 202 can include a base station controller (BSC) 206, which may also be referred to by those of skill in the art as a radio network controller (RNC). The base station controller 206 is generally responsible for the establishment, release, and maintenance of wireless connections within one or more coverage areas associated with the one or more base stations 102 which are connected to the base station controller 206. The base station controller 206 can be communicatively coupled to one or more nodes or entities of the core network 204.

The core network 204 is a portion of the wireless communications system 100 that provides various services to access terminals 104 that are connected via the radio access network 202. The core network 204 may include a circuit-switched (CS) domain and a packet-switched (PS) domain. Some examples of circuit-switched entities include a mobile switching center (MSC) and visitor location register (VLR), identified as MSCNLR 208, as well as a Gateway MSC (GMSC) 210. Some examples of packet-switched elements include a Serving GPRS Support Node (SGSN) 212 and a Gateway GPRS Support Node (GGSN) 214. Other network entities may be included, such as an EIR, a HLR, a VLR and/or a AuC, some or all of which may be shared by both the circuit-switched and packet-switched domains. An access terminal 104 can obtain access to a public switched telephone network (PSTN) 216 via the circuit-switched domain, and to an IP network 218 via the packet-switched domain.

One or more of the access terminals 104 operating within the wireless communications system 100 may include one or more capabilities (e.g., features and/or characteristics) for which one or more performance attributes can be beneficially modified. For example, one or more access terminals 104 may be stationary or substantially stationary, may be relatively power sensitive, and/or some other feature or characteristic.

At least one example of a stationary or substantially stationary access terminal 104 includes an access terminal 104 adapted for machine-to-machine (M2M) communications (also sometimes referred to as machine-type communication or MTC). An M2M adapted access terminal 104 may be adapted to wirelessly communicate with one or more devices over the wireless communication system 100, at least substantially without user interaction. M2M access terminals 104 may include a communications device adapted to capture an event (e.g., a sensor that captures temperature, a meter to capture inventory level, etc.), which is relayed through the wireless communication system 100 to an application (e.g., software program), where the event data can be translated into meaningful information (e.g., temperature needs to be lowered/raised, items need to be restocked, etc.). By way of example and not limitation, an M2M access terminal 104 may include a thermostat, an electric meter, a gas meter, a water meter, a sprinkler system, a smart-meter, an appliance, an alarm system, etc.

At least one example of a power sensitive access terminal 104 may include an access terminal employing a battery as a power source. For such an access terminal 104, recharging and/or replacement of the battery may be inconvenient and/or expensive. For instance, it may be difficult to recharge and/or replace a battery employed by an M2M adapted access terminal 104. As a result, it may be desirable to significantly prolong battery life in such access terminals 104.

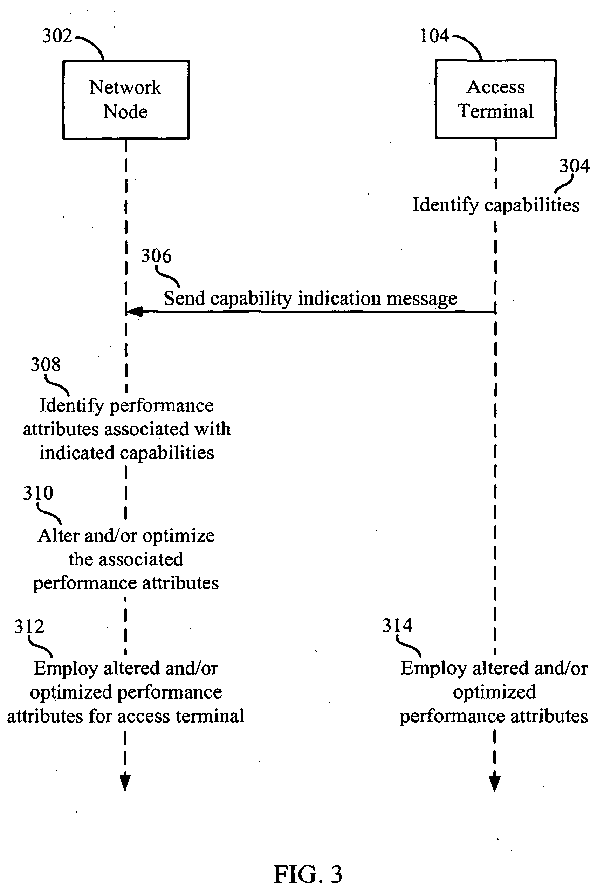

According to one or more aspects of the present disclosure, access terminals can be adapted to indicate to a network node one or more features and/or characteristics, and network nodes can be adapted to implement one or more optimizations in response to each indicated feature or characteristic. FIG. 3 is a flow diagram illustrating an example for adapting one or more network features for a particular access terminal. As shown, an access terminal 104 can communicate with a network node 302. The network node 302 may represent one or more network elements, such as a base station 102 and/or a base station controller 206, which are illustrated in FIGS. 1 and 2.

Initially, the access terminal 104 may identify one or more capabilities 304. For instance, the access terminal 104 may identify one or more features it is capable of facilitating, and/or one or more characteristics associated with the access terminal 104. In at least some examples, the access terminal 104 may identify capabilities including the access terminal 104 being a stationary device and/or a power-sensitive device. The access terminal may be provisioned with initial capability settings stored in memory. In some embodiments, capability settings can be modified by either an access terminal 104 and/or a network node 302.

When one or more capabilities are identified by the access terminal 104, the access terminal 104 may send a capability indication message 306 to the network node 302. The capability indication message is adapted to identify one or more capabilities (e.g., characteristics and/or features) associated with the access terminal. In some examples, the capability indication message can be transmitted with another conventional message by extending the conventional message using a general extension message (GEM). For instance, the capability indication message may be conveyed in a general extension message together with a registration message, an origination message, a page response message, etc.

When the network node 302 receives the capability indication message, the network node 302 can identify 308 one or more performance attributes that can be adjusted (e.g., altered or optimized) in response to the indicated capabilities. In response to the indicated capabilities, the network node 302 can alter and/or optimize 310 the one or more identified performance attributes with respect to the access terminal 104.

The network node 302 can employ 312 the one or more altered or optimized performance attributes in operations involving the access terminal 104. Similarly, the access terminal 104 can employ 314 the one or more altered or optimized performance attributes in operations with the network. For example, the network node 302 and the access terminal 104 can employ altered or optimized messaging, timers, and/or other operations.

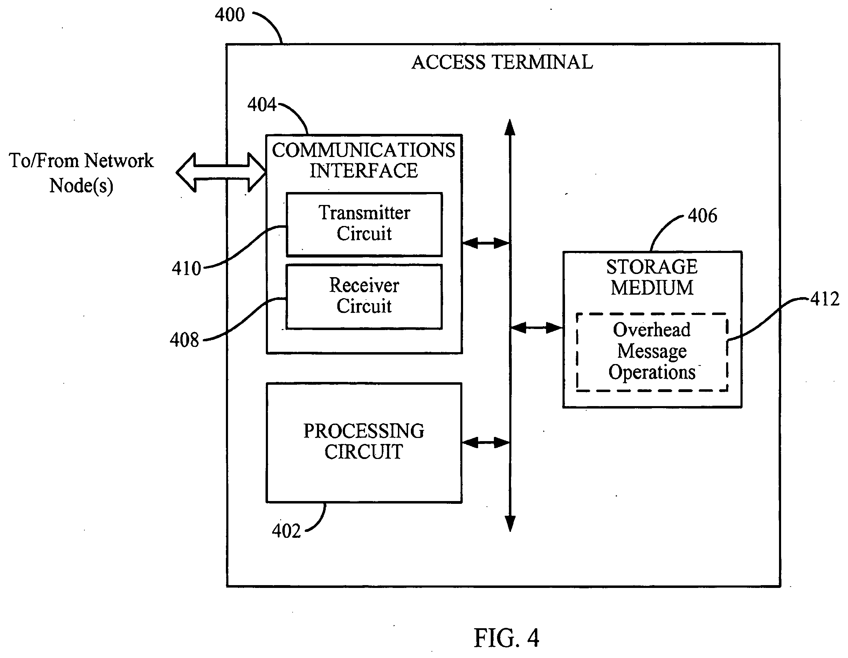

Turning to FIG. 4, a block diagram is shown illustrating select components of an access terminal 400 according to at least one example of the present disclosure. The access terminal 400 includes a processing circuit 402 coupled to or placed in electrical communication with a communications interface 404 and a storage medium 406.

The processing circuit 402 is arranged to obtain, process and/or send data, control data access and storage, issue commands, and control other desired operations. The processing circuit 402 may include circuitry adapted to implement desired programming provided by appropriate media in at least one example. For example, the processing circuit 402 may be implemented as one or more processors, one or more controllers, and/or other structure configured to execute executable programming. Examples of the processing circuit 402 may include a general purpose processor, a digital signal processor (DSP), an application specific integrated circuit (ASIC), a field programmable gate array (FPGA) or other programmable logic component, discrete gate or transistor logic, discrete hardware components, or any combination thereof designed to perform the functions described herein. A general purpose processor may include a microprocessor, as well as any conventional processor, controller, microcontroller, or state machine. The processing circuit 402 may also be implemented as a combination of computing components, such as a combination of a DSP and a microprocessor, a number of microprocessors, one or more microprocessors in conjunction with a DSP core, an ASIC and a microprocessor, or any other number of varying configurations. These examples of the processing circuit 402 are for illustration and other suitable configurations within the scope of the present disclosure are also contemplated.

The processing circuit 402 is adapted for processing, including the execution of programming, which may be stored on the storage medium 406. As used herein, the term "programming" shall be construed broadly to include without limitation instructions, instruction sets, code, code segments, program code, programs, subprograms, software modules, applications, software applications, software packages, routines, subroutines, objects, executables, threads of execution, procedures, functions, etc., whether referred to as software, firmware, middleware, microcode, hardware description language, or otherwise.

The communications interface 404 is configured to facilitate wireless communications of the access terminal 400. For example, the communications interface 404 may include circuitry and/or programming adapted to facilitate the communication of information bi-directionally with respect to one or more wireless network devices (e.g., network nodes). The communications interface 404 may be coupled to one or more antennas (not shown), and includes wireless transceiver circuitry, including at least one receiver circuit 408 (e.g., one or more receiver chains) and/or at least one transmitter circuit 410 (e.g., one or more transmitter chains).

The storage medium 406 may represent one or more computer-readable, machine-readable, and/or processor-readable devices for storing programming, such as processor executable code or instructions (e.g., software, firmware), electronic data, databases, or other digital information. The storage medium 406 may also be used for storing data that is manipulated by the processing circuit 402 when executing programming. The storage medium 406 may be any available media that can be accessed by a general purpose or special purpose processor, including portable or fixed storage devices, optical storage devices, and various other mediums capable of storing, containing and/or carrying programming. By way of example and not limitation, the storage medium 406 may include a computer-readable, machine-readable, and/or processor-readable storage medium such as a magnetic storage device (e.g., hard disk, floppy disk, magnetic strip), an optical storage medium (e.g., compact disk (CD), digital versatile disk (DVD)), a smart card, a flash memory device (e.g., card, stick, key drive), random access memory (RAM), read only memory (ROM), programmable ROM (PROM), erasable PROM (EPROM), electrically erasable PROM (EEPROM), a register, a removable disk, and/or other mediums for storing programming, as well as any combination thereof.

The storage medium 406 may be coupled to the processing circuit 402 such that the processing circuit 402 can read information from, and write information to, the storage medium 406. That is, the storage medium 406 can be coupled to the processing circuit 402 so that the storage medium 406 is at least accessible by the processing circuit 402, including examples where the storage medium 406 is integral to the processing circuit 402 and/or examples where the storage medium 406 is separate from the processing circuit 402 (e.g., resident in the access terminal 400, external to the access terminal 400, distributed across multiple entities).

Programming stored by the storage medium 406, when executed by the processing circuit 402, causes the processing circuit 402 to perform one or more of the various functions and/or process steps described herein. For example, the storage medium 406 may include or store device capability operations 412, which can also be referred to as performance attribute alteration operations. The device capability operations 412 are adapted to cause the processing circuit 402 to identify device capabilities, send a capability indication message, and employ altered performance attributes, as described herein. Thus, according to one or more aspects of the present disclosure, the processing circuit 402 is adapted to perform (in conjunction with the storage medium 406) any or all of the processes, functions, steps and/or routines for any or all of the access terminals (e.g., access terminal 104, access terminal 400) described herein. As used herein, the term "adapted" in relation to the processing circuit 402 may refer to the processing circuit 402 being one or more of configured, employed, implemented, and/or programmed (in conjunction with the storage medium 406) to perform a particular process, function, step and/or routine according to various features described herein.

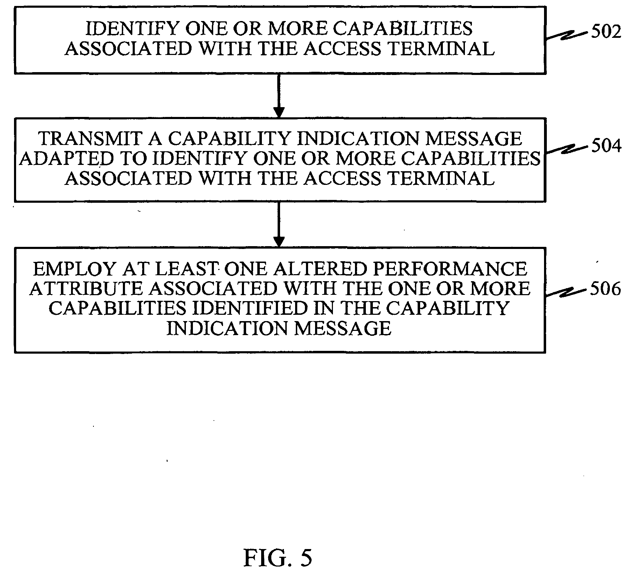

FIG. 5 is a flow diagram illustrating at least one example of a method operational on an access terminal, such as the access terminal 400. Referring to FIGS. 4 and 5, an access terminal 400 can identify one or more capabilities associated with the access terminal 400 at step 502. Such capabilities may relate to one or more characteristics of the access terminal 400 and/or one or more features the access terminal 400 is capable of facilitating. In at least one implementation, the processing circuit 402 executing the device capability operations 412 can identify the one or more capabilities associated with the access terminal 400. By way of example only, capabilities associated with the access terminal 400 which the processing circuit 402 executing the device capability operations 412 may identify can include the device mobility and/or the power sensitivity of the device.

In determining device mobility, the processing circuit 402 executing the device capability operations 412 may determine whether the access terminal 400 is stationary or substantially stationary. In some implementations, this determination may include the processing circuit 402 accessing pre-provisioned data (or pre-configured information) stored in the storage medium 406 and adapted to define a mobility type. The mobility type can be adapted to indicate to the processing circuit 402 that the access terminal 400 is at least substantially stationary. The mobility type may include an indication that the access terminal 400 is a M2M configured access terminal 400 that is fixed in a stationary location. Mobility type may be represented by a stored value (e.g., bits, description, etc.), and the stored value can be modified depending on operational and/or performance characteristics.

In some implementations, the processing circuit 402 executing the device capability operations 412 may store and review information relating to cell reselection procedures to determine how often cell reselection procedures have been conducted. The processing circuit 402 may also take into account whether previous cell reselections have been limited to a common group of the same cells (e.g., whether the access terminal 400 has only changed between the same two or three cells). According to various examples, the processing circuit 402 executing the overhead message operations 412 can determine the access terminal 400 is stationary or substantially stationary when there have been no cell reselections over the course of a predetermined period of time (e.g., a couple of days, a week, a month, etc.), and/or when previous cell reselections are limited to reselections between a common group of the same cells.

In some implementations, the processing circuit 402 executing the device capability operations 412 may monitor a relative pilot signal strength of each of a plurality of neighboring cell. When the relative signal strength of one or more neighboring cells remains at least substantially the same for a predetermined duration of time (e.g., the difference in signal strength from one measurement to the next is less than some predefined threshold), the processing circuit 402 executing the overhead message operations 412 may conclude that the access terminal 400 is at least substantially stationary.

In some implementations, the processing circuit 402 executing the device capability operations 412 may monitor a GPS location (e.g., via a GPS circuit (not shown) of the access terminal 400) to determine whether the access terminal 400 is mobile or at least substantially stationary. For example, the processing circuit 402 may monitor a GPS location at some predetermined frequency. When any change in GPS location is less than a predefined threshold, the processing circuit 402 executing the overhead message operations 412 may determine that the access terminal 400 is at least substantially stationary. Although the foregoing examples are described for determining the mobility of the access terminal 400, other examples may also be employed, as well as various combinations of two or more examples.

In determining the power sensitivity of the device, the processing circuit 402 executing the device capability operations 412 may determine whether the access terminal 400 is power sensitive. In some implementations, this determination may include the processing circuit 402 accessing pre-provisioned data (or pre-configured information) stored in the storage medium 406 and adapted to define a power-sensitivity type. The power-sensitivity type can be adapted to indicate to the processing circuit 402 that the access terminal 400 is power sensitive. That is, the power-sensitivity type can indicate that a significantly long battery life is desired. The power-sensitivity type may include an indication that the access terminal 400 is adapted for M2M features. Power-sensitivity type may be represented by a stored value (e.g., bits, description, etc.), and the stored value can be modified depending on operational and/or performance characteristics.

The foregoing examples of access terminal capabilities (e.g., stationary, power sensitive) are provided by way of example only. Those of ordinary skill in the art will comprehend that any number of capabilities (e.g., device characteristics and/or features) may be conducive to one or more corresponding altered performance attributes, as described below, and may therefore be amenable to being included as an identified capability.

At step 504, the access terminal 400 can transmit a capability indication message adapted to identify one or more capabilities associated with the access terminal 400, such as one or more of the capabilities identified at step 502. For example, the processing circuit 402 executing the device capability operations 412 may send a capability indication message via the communications interface identifying one or more capabilities (e.g., identifying the access terminal 400 as stationary and/or as power sensitive). In one or more implementations, the processing circuit 402 executing the device capability operations 412 may send the capability indication message at the time of registration with the network. In some instances, the processing circuit 402 executing the device capability operations 412 may convey the capability indication message together with another conventional message by extending the conventional message using a general extension message (GEM). The processing circuit 402 executing the device capability operations 412 can identify the availability of employing a general extension message by information obtained in overhead messages (e.g., sector parameters messages). Some examples of conventional messages with which the capability indication message may be conveyed include registration messages, origination messages, page response messages, etc.

At step 506, the access terminal 400 can employ one or more altered performance attributes associated with the one or more capabilities identified in the capability indication message. For example, the processing circuit 402 executing the device capability operations 412 can employ the one or more altered performance attributes associated with the one or more capabilities identified in the capability indication message.

In at least one example where the capability indication message identifies the access terminal 400 as a stationary device, at least one adjusted performance attribute may include the processing circuit 402 receiving page messages via the communications interface 404, which page messages have been transmitted by the network to a limited paging area corresponding to a location recently associated with the access terminal 400. That is, the page messages received by the access terminal 400 are transmitted by the network to a reduced or smaller paging area (e.g., corresponding to one or two sectors) in which the access terminal 400 has recently been located by the network. The stationary access terminal 400 can still receive such page messages by virtue of it being stationary.

In other examples, where the capability indication message identifies the access terminal 400 as a stationary device, at least one other adjusted performance attribute may include the processing circuit 402 receiving direct channel assignments via the communications interface 404. That is, channel assignments received by the access terminal 400 are transmitted by the network without previously sending a page message to verify the location of the access terminal 400. Channel assignment messages are relatively larger than page messages, and direct channel assignments can waste paging channel resources. As a result, the access terminal 400 would conventionally receive a page message sent to large area. By responding to the page message, the access terminal 400 would assist the network in verifying where the access terminal 400 is located, and the access terminal 400 would then receive a channel assignment message that is sent to a relatively smaller area corresponding to the location of the access terminal 400. In the example of the present disclosure, the access terminal 400 has identified itself as a stationary device so the network can send the direct channel assignment to limited area associated with the access terminal's 400 location, without employing a previous page message. Accordingly, the access terminal 400 can receive a direct channel assignment that is sent without a preceding page message.

Reception of direct channel assignments may also be an adjusted performance attribute in other examples where the capability indication message identifies the access terminal 400 as a power-sensitive device. Since the direct channel assignments eliminate the reception of a preceding page message and the response by the access terminal 400 to the preceding page message, the direct channel assignments can reduce power consumption in the access terminal 400. For instance, the processing circuit 402 can keep the access terminal 400 in a low-power state for a longer period of time by eliminating these communications. In addition to the access terminal 400 being identified as a power-sensitive device, the direct channel assignments would be employed when the network has additional knowledge that the access terminal 400 is a stationary device, or when the network has had recent communication with the access terminal 400 and is aware of its current location.

In at least one example where the capability indication message identifies the access terminal 400 as a power-sensitive device, at least one adjusted performance attribute may include a reduced dormancy timer associated with the access terminal 400. That is, the dormancy timer associated with the access terminal 400 may have a reduced value relative to an initial or previous setting. In this way, if there is little or no activity on a traffic channel for the access terminal 400, the traffic channel can be released or scaled down to reduce power consumption at the access terminal 400.

In one or more other examples where the capability indication message identifies the access terminal 400 as a power-sensitive device, at least one adjusted performance attribute may include employing fast call setup. That is, the processing circuit 402 executing the device capability operations 412 can employ conventional fast call setup parameters in response to the capability indication message identifying the access terminal 400 as power sensitive. Fast call setup generally refers to an accelerated process in call setup (e.g., bearer resource assignment), including a set of enhancements/mechanisms that reduce the latency involved in access-terminal-terminated and access-terminal-originated call setup. Call setup involves a set of signaling message exchanges between the access terminal, a base station and the network in order to allocate resources and allow user communication to proceed.

In another example where the capability indication message identifies the access terminal 400 as a power-sensitive device, at least one adjusted performance attribute may include employing an increased point-to-point protocol (PPP) inactivity timer. For instance, the processing circuit 402 may receive a communication from the network including an indication that an increased point-to-point protocol (PPP) inactivity timer is employed for the access terminal 400. Typically, the access terminal 400 may expend significant resources in establishing a PPP session, including significant power. The increased PPP inactivity timer can be significantly greater than a conventional timer period for maintaining a PPP session. In this manner, even though the access terminal 400 may be inactive for an extended period of time, the PPP session can be maintained so that there will not be a need to establish a new PPP session when communications are ready.

The foregoing examples of altered performance attributes are provided by way of example only. Those of ordinary skill in the art will comprehend that any number of performance attributes associated with one or more device capabilities may be conducive to being altered for the beneficial performance of the access terminal and/or the network, and may therefore be amenable to being included as an altered performance attribute.

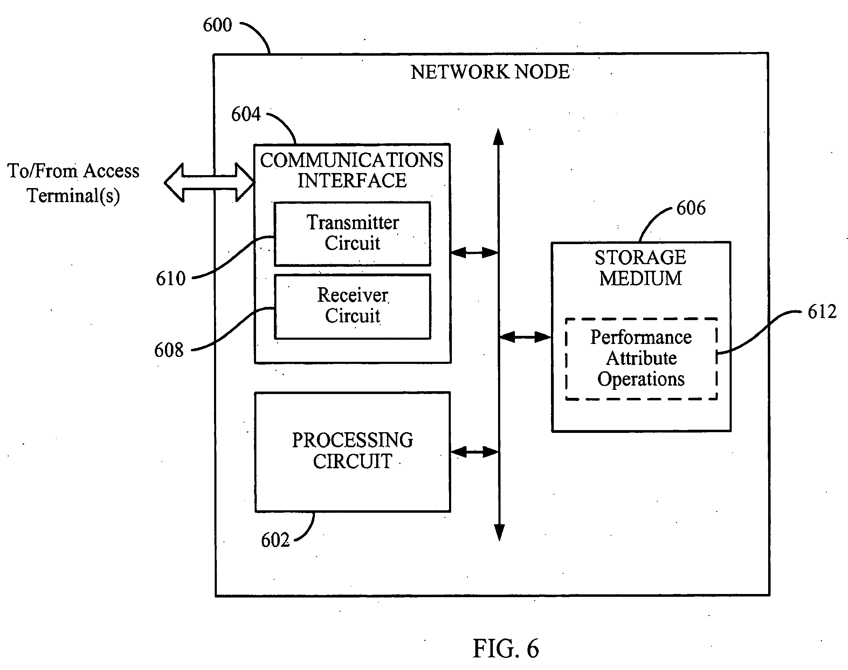

Turning to FIG. 6, a block diagram is shown illustrating select components of a network node 600 according to at least one example. The network node 600 may include a processing circuit 602 coupled to or placed in electrical communication with a communications interface 604 and a storage medium 606.

The processing circuit 602 is arranged to obtain, process and/or send data, control data access and storage, issue commands, and control other desired operations. The processing circuit 602 may include circuitry configured to implement desired programming provided by appropriate media in at least one example, and may be implemented and/or adapted according to any of the examples of the processing circuit 402 described above.

The communications interface 604 is configured to facilitate wireless communications of the network node 600. For example, the communications interface 604 may include circuitry and/or programming adapted to facilitate the communication of information bi-directionally with respect to one or more access terminals. The communications interface 604 may be coupled to one or more antennas (not shown), and includes wireless transceiver circuitry, including at least one receiver circuit 608 (e.g., one or more receiver chains) and/or at least one transmitter circuit 610 (e.g., one or more transmitter chains).

The storage medium 606 may represent one or more computer-readable, machine-readable, and/or processor-readable devices for storing programming, such as processor executable code or instructions (e.g., software, firmware), electronic data, databases, or other digital information. The storage medium 606 may be configured and/or implemented in a manner similar to the storage medium 406 described above.

The storage medium 606 may be coupled to the processing circuit 602 such that the processing circuit 602 can read information from, and write information to, the storage medium 606. That is, the storage medium 606 can be coupled to the processing circuit 602 so that the storage medium 606 is at least accessible by the processing circuit 602. This can include scenarios where the storage medium 606 is integral to the processing circuit 602 and/or examples where the storage medium 606 is separate from the processing circuit 602 (e.g., resident in the network node 600, external to the network node 600, distributed across multiple entities).

Like the storage medium 406, the storage medium 606 includes programming stored thereon. The programming stored by the storage medium 606, when executed by the processing circuit 602, causes the processing circuit 602 to perform one or more of the various functions and/or process steps described herein. For example, the storage medium 606 may include performance attribute operations 612 adapted to cause the processing circuit 602 to employ one or more altered or modified performance attributes for a particular access terminal in response to identification of one or more capabilities associated with the access terminal. Thus, according to one or more aspects of the present disclosure, the processing circuit 602 is adapted to perform (in conjunction with the storage medium 606) any or all of the processes, functions, steps and/or routines for any or all of the network nodes described herein (e.g., base station 102, base station controller 206, and/or network node 302 in FIGS 1-3). As used herein, the term "adapted" in relation to the processing circuit 602 may refer to the processing circuit 602 being one or more of configured, employed, implemented, and/or programmed (in conjunction with the storage medium 606) to perform a particular process, function, step and/or routine according to various features described herein.

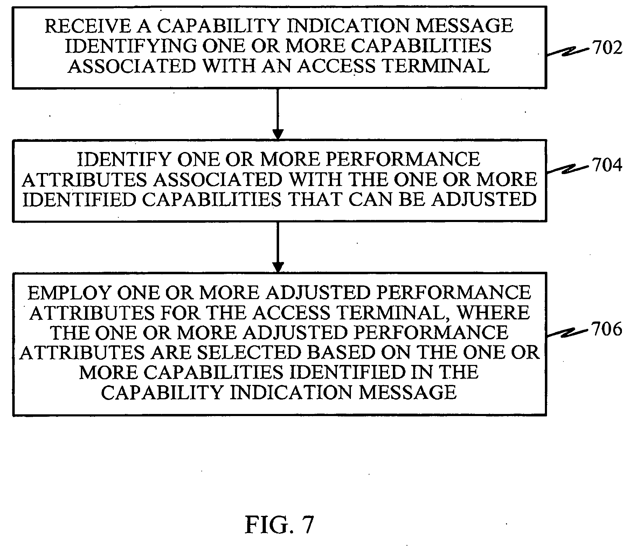

FIG. 7 is a flow diagram illustrating at least one example of a method operational on a network node, such as the network node 600. Referring to FIGS. 6 and 7, a network node 600 may receive a capability indication message identifying one or more capabilities associated with an access terminal at step 702. For instance, the processing circuit 602 executing the performance attribute operations 612 may receive the capability indication message via the communications interface 604. In some implementations, the capability indication message may be received by the network node 600 when the access terminal is registering with the network. In one or more examples, the capability indication message may be received together with another conventional message in a general extension message (GEM). As noted above, some examples of capabilities associated with an access terminal that may be identified by the capability indication message may include device mobility, the power sensitivity of the device, as well as any other capability (e.g., device characteristic and/or feature) that may be conducive to application of one or more altered performance attributes.

At step 704, the network node 600 can identify one or more performance attributes that can be adjusted in view of the one or more capabilities identified in the received capability indication message. For example, the performance attribute operations 612 may include a table with all possible capabilities that can be identified by the capability indication message and their respective performance attribute modifications. The processing circuit 602 executing the performance attribute operations 612 can accordingly obtain each of the capabilities identified in the capability indication message, and then identify from the table each performance attribute associated with the identified capabilities that can be beneficially adjusted for the respective access terminal.

At step 706, the network node 600 can employ one or more adjusted performance attributes for the access terminal. For example, the processing circuit 602 executing the performance attribute operations 612 can employ one or more of the adjusted performance attributes identified in step 704.

In at least one example where the capability indication message identifies the access terminal as a stationary device, an example of an adjusted performance attribute includes transmitting page messages for the access terminal to a limited paging area corresponding to a location recently associated with the access terminal. For example, in response to the capability indication message identifying the access terminal as stationary, the processing circuit 602 executing the performance attribute operations 612 can cause page messages directed to the access terminal to be transmitted in a reduced or smaller paging area according to the last known location of the access terminal. In at least one implementation, on identifying the access terminal as a stationary device, the processing circuit 602 executing the performance attribute operations 612 can store information associated with the most recent active set utilized by the access terminal. In some examples, this active set information can be stored by a base station controller (BSC), such as the BSC 206 in FIG. 2. When a page is to be transmitted for the access terminal, the network node 600 can transmit the first page over a limited area corresponding to the last active set for the access terminal. For instance, the processing circuit 602 executing the performance attribute operations 612 may cause the page to be transmitted over a set of cells corresponding to the most recent active set for the access terminal.

In another example where the capability indication message identifies the access terminal as a stationary device, an example of an adjusted performance attribute includes the network node 600 transmitting direct channel assignments to the access terminal. As described herein above, a channel assignment is relatively larger than a page. In order to conserve system resources, the network typically transmits a page for the access terminal prior to sending a channel assignment so that the channel assignment is not sent over a relatively large area. After the access terminal responds to the page, the network node 600 can transmit a channel assignment in a very limited area. In this example, the network node 600 knows that the access terminal is stationary. Accordingly, in response to the capability indication message identifying the access terminal as stationary, the processing circuit 602 executing the performance attribute operations 612 can transmit a channel assignment to the access terminal without sending a preceding page to the access terminal. The channel assignment can be transmitted to the reduced or smaller area corresponding to a previously known location of the access terminal without sending the page before the channel assignment. As noted above, this can be referred to as direct channel assignment.

The direct channel assignments can also be employed in response to the capability indication message identifying the access terminal as a power-sensitive device. In such examples, the direct channel assignments may be employed when the network node 600 has additional knowledge that the access terminal is a stationary device, or when the network node 600 is already aware of the access terminal's current location. In such instances, the page can be skipped and the channel assignment can be sent directly.

In an example where the capability indication message identifies the access terminal as a power-sensitive device, an example of an adjusted performance attribute includes employing a reduced dormancy timer for the access terminal. That is, in response to the capability indication message identifying the access terminal as power sensitive, the processing circuit 602 executing the performance attribute operations 612 can adjust the dormancy timer for the access terminal to a reduced duration. In this manner, the processing circuit 602 executing the performance attribute operations 612 can release or scale down a traffic channel for the access terminal when there is little or no activity with the access terminal for the duration of the dormancy timer.

In another example where the capability indication message identifies the access terminal as power sensitive, an example of an adjusted performance attribute includes employing fast call setup with the access terminal. For instance, in response to the capability indication message identifying the access terminal as a power-sensitive device, the processing circuit 602 executing the performance attribute operations 612 can employ fast call setup with the access terminal. As noted previously herein, fast call setup refers to an accelerated process in call setup (bearer resource assignment), including a set of enhancements/mechanisms that reduce the latency involved in access-terminal-terminated and access-terminal-originated call setup. Call setup involves a set of signaling message exchanges between the access terminal, a base station and the network in order to allocate resources and allow user communication to proceed.

In another example where the capability indication message identifies the access terminal as power sensitive, an example of an adjusted performance attribute includes employing an increased point-to-point protocol (PPP) inactivity timer. That is, in response to the capability indication message identifying the access terminal as a power-sensitive device, the processing circuit 602 executing the performance attribute operations 612 can employ a PPP inactivity timer with a significantly longer duration compared to a conventional PPP inactivity timer.

These examples of various capabilities and their associated altered performance attributes are for example and illustration only. Those of ordinary skill in the art will understand that any number of device capabilities and/or performance attributes associated with one or more device capabilities may be employed within the various features of the present disclosure to optimizing operation of access terminals and network nodes.

While the above discussed aspects, arrangements, and embodiments are discussed with specific details and particularity, one or more of the components, steps, features and/or functions illustrated in FIGS. 1, 2, 3, 4, 5, 6 and/or 7 may be rearranged and/or combined into a single component, step, feature or function or embodied in several components, steps, or functions. Additional elements, components, steps, and/or functions may also be added or not utilized without departing from the present disclosure. The apparatus, devices and/or components illustrated in FIGS. 1, 2, 3, 4 and/or 6 may be configured to perform or employ one or more of the methods, features, parameters, and/or steps described in FIGS. 3, 5 and/or 7. The novel algorithms described herein may also be efficiently implemented in software and/or embedded in hardware.

Also, it is noted that at least some implementations have been described as a process that is depicted as a flowchart, a flow diagram, a structure diagram, or a block diagram. Although a flowchart may describe the operations as a sequential process, many of the operations can be performed in parallel or concurrently. In addition, the order of the operations may be re-arranged. A process is terminated when its operations are completed. A process may correspond to a method, a function, a procedure, a subroutine, a subprogram, etc. When a process corresponds to a function, its termination corresponds to a return of the function to the calling function or the main function. The various methods described herein may be partially or fully implemented by programming (e.g., instructions and/or data) that may be stored in a machine-readable, computer-readable, and/or processor-readable storage medium, and executed by one or more processors, machines and/or devices.

Those of skill in the art would further appreciate that the various illustrative logical blocks, modules, circuits, and algorithm steps described in connection with the embodiments disclosed herein may be implemented as hardware, software, firmware, middleware, microcode, or any combination thereof. To clearly illustrate this interchangeability, various illustrative components, blocks, modules, circuits, and steps have been described above generally in terms of their functionality. Whether such functionality is implemented as hardware or software depends upon the particular application and design constraints imposed on the overall system.

## Claims

1. An access terminal (104, 400), comprising:
means for identifying the access terminal (104, 400) as power sensitive;
means for transmitting a capability indication message adapted to identify the access terminal (104, 400) as power sensitive; and
means for employing at least one adjusted performance attribute associated with the capability indication message.

2. The access terminal (104, 400), according to claim 1 further comprising:
a communications interface (404);
a storage medium (406); and
wherein the means for transmitting and means for employing comprises a processing circuit (402) coupled to the communications interface and the storage medium.

3. The access terminal (104, 400) of claim 1 or 2, wherein the capability indication message is sent in a general extension message.

4. The access terminal (104, 400) of claim 1 or claim 2, wherein the capability indication message is further adapted to identify the access terminal (104, 400) as stationary.

5. The access terminal (104, 400) of claim 4, wherein the at least one altered performance attribute includes one or more altered performance attributes selected from a group of altered performance attributes comprising:
reception of a page message transmitted to a limited paging area corresponding to a location recently associated with the access terminal (104, 400);
reception of a direct channel assignment sent without a preceding page;
a reduced dormancy timer;
a fast call setup; and
an increased point-to-point protocol, PPP inactivity timer.

6. The access terminal (104, 400) according to claim 1 wherein the means for identifying is configured to identify the access terminal as at least one of a stationary access terminal or a power sensitive access terminal; the means for transmitting is adapted to identify the access terminal as at least one of a stationary access terminal or a power sensitive access terminal; and wherein the at least one adjusted performance attribute includes one or more adjusted performance attributes selected from a group of adjusted performance attributes comprising:
reception of a page message transmitted to a limited paging area corresponding to a location recently associated with the access terminal;
reception of a direct channel assignment sent without a preceding page;
a reduced dormancy timer;
a fast call setup; and
an increased point-to-point protocol, PPP inactivity timer.

7. A method operational on an access terminal, comprising:
identifying (502) the access terminal as power sensitive;
transmitting (504) a capability indication message adapted to identify the access terminal as power sensitive; and
employing (506) at least one adjusted performance attribute associated with the capability indication message.

8. A computer-readable storage medium, comprising programming for causing a computer to:
implement the method according to claim 7 when executed by a processing module.

9. A network node (102,302, 600), comprising:
means for receiving a capability indication message identifying an access terminal as power sensitive; and
means for employing at least one adjusted performance attribute for the access terminal-based on the received capability indication message.

10. The network node (102,302, 600) according to claim 9 further comprising:
a communications interface (604);
a storage medium (606); and wherein the means for receiving and means for employing comprises a processing circuit (602) coupled to the communications interface and the storage medium.

11. The network node (102,302, 600) of any of claims 9 or 10, wherein the at least one adjusted performance attribute comprises at least one adjusted performance attribute selected from a group of adjusted performance attributes comprising:
transmission of a page message for the access terminal to a limited paging area corresponding to a location recently associated with the access terminal; and
transmission of a direct channel assignment to the access terminal without a previously transmitted page message or
a reduced duration for a dormancy timer associated with the access terminal;
transmission of a direct channel assignment to the access terminal without a previously transmitted page message;
a fast call setup procedure for the access terminal; and
an increased duration of a point-to-point protocol, PPP inactivity timer associated with the access terminal.

12. A network node (102,302, 600) according to claim 10 wherein:
means for receiving a capability indication message identifying an access terminal as power sensitive is further configured to receive a capability indication message identifying an access terminal as at least one of a stationary access terminal or a power sensitive access terminal; and
where the at least one adjusted performance attribute is selected based on the at least one capability identified in the received capability indication message, and wherein the at least one adjusted performance attribute includes one or more adjusted performance attributes selected from a group of adjusted performance attributes comprising:
reception of a page message transmitted to a limited paging area corresponding to a location recently associated with the access terminal;
reception of a direct channel assignment sent without a preceding page;
a reduced dormancy timer;
a fast call setup; and
an increased point-to-point protocol, PPP inactivity timer.

13. A method operational on a network node (102,302, 600), comprising:
receiving (702) a capability indication message identifying an access terminal as power sensitive; and
employing (706) at least one adjusted performance attribute for the access terminal based on the received capability indication message.

14. A computer-readable storage medium, comprising programming for causing a computer to:
implement the method according to claim 13 when executed by a processing module.

## Patentansprüche

1. Ein Zugriffsendgerät (104, 400), das Folgendes aufweist:
Mittel zum Identifizieren, dass das Zugriffsendgerät (104, 400) leistungsempfindlich ist;
Mittel zum Senden bzw. Übertragen einer Fähigkeitsanzeigenachricht, die ausgelegt ist um das Zugriffsendgerät (104, 400) als leistungsempfindlich zu identifizieren;
Mittel zum Verwenden bzw. Einsetzen wenigstens eines angepassten bzw. eingestellten Performance- bzw. Leistungsattributs, das mit der Fähigkeitsanzeigenachricht assoziiert ist.

2. Zugriffsendgerät (104, 400) nach Anspruch 1, das weiter Folgendes aufweist:
eine Kommunikationsschnittstelle (404);
ein Speichermedium (406); und
wobei die Mittel zum Senden und die Mittel zum Verwenden eine Verarbeitungsschaltung (402) aufweisen, die an die Kommunikationsschnittstelle und das Speichermedium gekoppelt ist.

3. Zugriffsendgerät (104, 400) nach Anspruch 1 oder 2, wobei die Fähigkeitsanzeigenachricht in einer allgemeinen Erweiterungsnachricht gesendet wird.

4. Zugriffsendgerät (104, 400) nach Anspruch 1 oder Anspruch 2, wobei die Fähigkeitsanzeigenachricht weiter ausgelegt ist zum Identifizieren, dass das Zugriffsendgerät (104, 400) stationär ist.

5. Zugriffsendgerät (104, 400) nach Anspruch 4, wobei das wenigstens eine veränderte Leistungs- bzw. Performance-Attribut ein oder mehrere veränderte Performance-Attribute beinhaltet, die aus einer Gruppe von veränderten Performance-Attributen ausgewählt sind, die Folgendes aufweist:
Empfang einer Page- bzw. Funkruf-Nachricht, die an einen begrenzten Paging-Bereich gesendet wird, der einem Standort entspricht, der vor kurzem mit dem Zugriffsendgerät (104, 400) assoziiert war;
Empfang einer Direktkanalzuweisung, die ohne einen vorhergehenden Page bzw. Funkruf gesendet wurde;
einen verringerten Ruhetimer;
einen schnellen Anrufaufbau; und
einen erhöhten PPP-Inaktivitätstimer (PPP = point-to-point protocol).

6. Zugriffsendgerät (104, 400) nach Anspruch 1, wobei die Mittel zum Identifizieren konfiguriert sind zum Identifizieren des Zugriffsendgeräts als ein stationäres Zugriffsendgerät und/oder ein leistungsempfindliches Zugriffsendgerät; wobei die Mittel zum Senden ausgelegt sind zum Identifizieren des Zugriffsendgeräts als wenigstens ein stationäres Zugriffsendgerät oder ein leistungsempfindliches Zugriffsendgerät; und wobei das wenigstens eine angepasste Performance-Attribut ein oder mehrere angepasste Performance-Attribute ausgewählt aus einer Gruppe von angepassten Performance-Attributen beinhaltet, die Folgendes aufweist:
Empfang einer Page- bzw. Funkrufnachricht, die an einen begrenzten Paging- bzw. Funkrufbereich entsprechend einem Standort, mit dem das Zugriffsendgerät vor kurzem assoziiert war, gesendet wird;
Empfang einer direkten Kanalzuweisung, die ohne einen vorhergehende Page gesendet wird;
einen verminderten Ruhetimer;
einen schnellen Anrufaufbau; und
einen erhöhten PPP-Inaktivitätstimer (PPP = point-to-point protocol).

7. Ein Verfahren, das auf einem Zugriffsendgerät betreibbar ist, das Folgendes aufweist:
Identifizieren (502), dass das Zugriffsendgerät leistungsempfindlich ist;
Senden bzw. Übertragen (504) einer Fähigkeitsanzeigenachricht, die ausgelegt ist um das Zugriffsendgerät als leistungsempfindlich zu identifizieren; und
Verwenden (506) wenigstens eines angepassten bzw. eingestellten Performance- bzw. Leistungsattributs, das mit der Fähigkeitsanzeige-nachricht assoziiert ist.

8. Ein computerlesbares Speichermedium, das Programmierung aufweist, um einen Computer zu veranlassen:
das Verfahren nach Anspruch 7 zu implementieren, wenn sie von einem Verarbeitungsmodus ausgeführt wird.

9. Ein Netzwerkknoten (102, 302, 600), der Folgendes aufweist:
Mittel zum Empfangen einer Fähigkeitsanzeigenachricht, die identifiziert,
dass ein Zugriffsendgerät leistungsempfindlich ist; und
Mittel zum Verwenden des wenigstens einen angepassten bzw. eingestellten Performance-Attributs für das Zugriffsendgerät, und zwar basierend auf der empfangenen Fähigkeitsanzeigenachricht.

10. Netzwerkknoten (102, 302, 600) nach Anspruch 9, der weiter Folgendes aufweist:
eine Kommunikationsschnittstelle (604);
ein Speichermedium (606); und wobei die Mittel zum Empfangen und die Mittel zum Verwenden eine Verarbeitungsschaltung (602) aufweisen, die an die Kommunikationsschnittstelle und das Speichermedium gekoppelt ist.

11. Netzwerkknoten (102, 302, 600) nach einem der Ansprüche 9 oder 10, wobei das wenigstens eine angepasste bzw. eingestellte Performance-Attribut wenigstens ein angepasstes Performance-Attribut aufweist, das aus der Gruppe von angepassten Performance-Attributen ausgewählt ist, die Folgendes aufweist:
Senden bzw. Übertragen einer Page- bzw. Funkruf-Nachricht für das Zugriffsendgerät an einen begrenzten Paging-Bereich entsprechend einem Standort, der vor kurzem mit dem Zugriffsendgerät assoziiert war; und
Senden bzw. Übertragen einer Direktkanalzuweisung an das Zugriffsendgerät ohne eine zuvor gesendete bzw. übertragene Page-Nachricht oder
eine verringerte Dauer für einen Ruhetimer, der mit dem Zugriffsendgerät assoziiert ist;
Senden bzw. Übertragen einer Direktkanalzuweisung an das Zugriffsendgerät ohne eine zuvor gesendete bzw. übertragene Page-Nachricht;
eine schnelle Anrufaufbauprozedur für das Zugriffsendgerät; und
eine erhöhte Dauer eines PPP-Inaktivitätstimers (PPP = point-to-point protocol), der mit dem Zugriffsendgerät assoziiert ist.

12. Ein Netzwerkknoten (102, 302, 600) gemäß Anspruch 10, wobei:
Mittel zum Empfangen einer Fähigkeitsanzeigenachricht, die ein Zugriffsendgerät als leistungsempfindlich identifiziert, weiter konfiguriert sind zum Empfangen einer Fähigkeitsanzeigenachricht, die ein Zugriffsendgerät als ein stationäres Zugriffsendgerät und/oder ein leistungsempfindliches Zugriffsendgerät identifiziert; und
wobei das wenigstens eine angepasste Performance-Attribut ausgewählt wird basierend auf der wenigstens einen Fähigkeit, die in der empfangenen Fähigkeitsanzeigenachricht identifiziert ist, und wobei das wenigstens eine angepasste Performance-Attribut ein oder mehrere angepasste Performance-Attribute beinhaltet, die aus einer Gruppe von angepassten Performance-Attributen ausgewählt sind, die Folgendes aufweist:
Empfang einer Page- bzw. Funkruf-Nachricht, die an einen begrenzten Paging-Bereich entsprechend einem Standort gesendet wird, mit dem das Zugriffsendgerät vor kurzem assoziiert war;
Empfang einer Direktkanalzuweisung, die ohne einen vorhergehenden Page gesendet wurde;
einen verringerten Ruhetimer;
einen schnellen Anrufaufbau; und
einen erhöhten PPP-Inaktivitätstimer (PPP = point-to-point protocol).

13. Ein Verfahren, das auf einem Netzwerkknoten (102, 302, 600) betreibbar ist, das Folgendes aufweist:
Empfangen (702) einer Fähigkeitsanzeigenachricht, die anzeigt, dass ein Zugriffsendgerät leistungsempfindlich ist; und
Verwenden (706) wenigstens eines angepassten Performance-Attributs für das Zugriffsendgerät basierend auf der empfangenen Fähigkeitsanzeigenachricht.

14. Ein computerlesbares Speichermedium, das Programmierung aufweist, um einen Computer zu veranlassen zum:
Implementieren des Verfahrens nach Anspruch 13, wenn sie von einem Verarbeitungsmodul ausgeführt wird.

## Revendications

1. Un terminal d'accès (104, 400), comprenant:
des moyens pour identifier le terminal d'accès (104, 400) comme étant critique en termes de consommation d'énergie ;
des moyens pour transmettre un message d'indication de capacités adaptés pour identifier le terminal d'accès (104, 400) comme étant critique en termes de consommation d'énergie, et
des moyens pour exploiter au moins un attribut de performance modifié associé au message d'indication de capacités.

2. Le terminal d'accès (104, 400) selon la revendication 1, comprenant en outre :
une interface de communication (404) ;
un support de stockage (406) ; et
dans lequel les moyens pour transmettre et les moyens pour exploiter comprennent un circuit de traitement (402) couplé à l'interface de communication et au support de stockage.

3. Le terminal d'accès (104, 400) selon la revendication 1 ou 2, dans lequel le message d'indication de capacités est envoyé dans un message général d'extension.

4. Le terminal d'accès (104, 400) selon la revendication 1 ou 2, dans lequel le message d'indication de capacités est en outre adapté pour identifier le terminal d'accès (104, 400) comme étant un terminal fixe.

5. Le terminal d'accès (104, 400) selon la revendication 4, dans lequel le au moins un attribut de performance modifié comprend un ou plusieurs attributs de performance modifiés choisis dans un groupe d'attributs de performance modifiés comprenant :
la réception d'un message de téléavertissement transmis à une zone de recherche limitée correspondant à un emplacement récemment associé au terminal d'accès (104, 400) ;
la réception d'une affectation directe de canal envoyée sans être précédée d'un message de téléavertissement ;
un temporisateur de latence réduit ;
un établissement d'appel rapide; et
un temporisateur d'inactivité du protocole point-à-point (PPP) augmenté.

6. Le terminal d'accès (104, 400) selon la revendication 1, dans lequel les moyens pour identifier sont configurés pour identifier le terminal d'accès comme étant au moins un parmi un terminal d'accès fixe ou un terminal d'accès qui est critique en termes de consommation d'énergie ; les moyens pour transmettre sont adaptés pour identifier le terminal d'accès comme étant au moins un parmi un terminal d'accès fixe ou un terminal d'accès qui est critique en termes de consommation d'énergie ; et dans lequel le au moins un attribut de performance modifié comprend un ou plusieurs attributs de performance modifiés choisis dans un groupe d'attributs de performance modifiés comprenant :
la réception d'un message de téléavertissement transmis à une zone de recherche limitée correspondant à un emplacement récemment associé au terminal d'accès ;
la réception d'une affectation directe de canal envoyée sans être précédée d'un message de téléavertissement ;
un temporisateur de latence réduit ;
un établissement d'appel rapide; et
un temporisateur d'inactivité du protocole point-à-point (PPP) augmenté.

7. Procédé susceptible d'être mis en oeuvre dans un terminal d'accès, comprenant:
l'identification (502) du terminal d'accès comme étant critique en termes de consommation d'énergie ;
la transmission (504) d'un message d'indication de capacités adapté pour identifier le terminal d'accès comme étant critique en termes de consommation d'énergie, et
l'exploitation (506) d'au moins un attribut de performance modifié associé au message d'indication de capacités.

8. Un support de stockage lisible par ordinateur, comprenant des programmes pour amener un ordinateur à :
mettre en oeuvre le procédé selon la revendication 7 lorsqu'ils sont exécutés par un module de traitement.

9. Un noeud de réseau (102, 302, 600), comprenant :
des moyens pour recevoir un message d'indication de capacités identifiant le terminal d'accès comme étant critique en termes de consommation d'énergie, et
des moyens pour exploiter au moins un attribut de performance modifié pour le terminal d'accès, basé sur le message d'indication de capacités reçu.

10. Un noeud de réseau (102, 302, 600) selon la revendication 9 comprenant en outre :
une interface de communication (604) ;
un support de stockage (606) ; et dans lequel les moyens pour recevoir et les moyens pour exploiter comprennent un circuit de traitement (602) couplé à l'interface de communication et le support de stockage.

11. Le noeud de réseau (102, 302, 600) selon l'une quelconque des revendications 9 ou 10, dans lequel le au moins un attribut de performance modifié comprend au moins un attribut de performance modifié choisi dans un groupe d'attributs de performance modifiés comprenant :
la transmission d'un message de téléavertissement pour le terminal d'accès vers une zone de recherche limitée correspondant à un emplacement récemment associé au terminal d'accès ; et
la transmission d'une affectation directe de canal au terminal d'accès en l'absence d'un message de téléavertissement précédemment transmis, où
une durée réduite pour un temporisateur de latence associé au terminal d'accès ;
la transmission d'une affectation directe de canal au terminal d'accès en l'absence d'un message de téléavertissement précédemment transmis,
une procédure d'établissement d'appel rapide pour le terminal d'accès ; et
une durée augmentée pour un temporisateur d'inactivité du protocole point-à-point (PPP) associé au terminal d'accès.

12. Un noeud de réseau (102, 302, 600) selon la revendication 10, dans lequel :
les moyens pour recevoir un message d'indication de capacités identifiant un terminal d'accès comme étant critique en termes de consommation d'énergie sont en outre configurés pour recevoir un message d'indication de capacités identifiant un terminal d'accès comme au moins un parmi un terminal d'accès fixe ou un terminal d'accès qui est critique en termes de consommation d'énergie, et
dans lequel le au moins un attribut de performance modifié est choisi sur la base de la au moins une capacité identifiée dans le message d'indication de capacités reçu, et dans lequel le au moins un attribut de performance modifié comprend un ou plusieurs attributs de performance modifiés choisis dans un groupe d'attributs de performance modifiés comprenant :
la réception d'un message de téléavertissement transmis à une zone de recherche limitée correspondant à un emplacement récemment associé au terminal d'accès ;
la réception d'une affectation directe de canal envoyée sans être précédée d'un message de téléavertissement ;
un temporisateur de latence réduit ;
un établissement d'appel rapide; et
un temporisateur d'inactivité du protocole point-à-point (PPP) augmenté.

13. Procédé susceptible d'être mis en oeuvre dans un noeud de réseau (102, 302, 600), comprenant :
la réception (702) d'un message d'indication de capacités identifiant un terminal d'accès comme étant critique du point de vue de sa consommation d'énergie; et
l'exploitation (706) de au moins un attribut de performance modifié pour le terminal d'accès, sur la base du message d'indication de capacités reçu.

14. Un support de stockage lisible par ordinateur, comprenant des programmes pour amener un ordinateur à :
mettre en oeuvre le procédé selon la revendication 13 lorsqu'ils sont exécutés par un module de traitement.
